# EUROPEAN PATENT SPECIFICATION

(11) **EP 1 581 389 B1**
(45) Date of publication and mention of the grant of the patent: **10.02.2010**
(21) Application number: 03814955.5
(22) Date of filing: 24.12.2003
(51) Int. Cl.: B32B 27/32

(54) **HEAT SEALABLE BIAXIALLY ORIENTED POLYPROPYLENE FILM**
HEISSIEGELHÄFIGE BIAXIAL GERECKTE POLYPROPYLENFOLIE
FILM DE POLYPROPYLENE THERMOSCELLABLE A ORIENTATION BIAXIALE

(30) Priority: 30.12.2002 US 436654 P
(43) Date of publication of application: 05.10.2005
(73) Proprietor: TORAY PLASTICS (AMERICA), INC., North Kingstown, RI 02852 (US)
(72) Inventor: SU, Tien-Kuei, Saunderstown, RI 02874 (US); MOREAU, Leo c/o Toray Plastics(America),Inc., North Kingstown, RI 02852-7500 (US)
(74) Representative: Wytenburg, Wilhelmus Johannes
(86) International application number: PCT/US2003/041244
(87) International publication number: WO 2004/060672

(56) References cited:
- EP-A- 0 803 352
- WO-A-00/09331
- US-A- 5 888 648
- US-A- 5 981 047
- US-A- 6 113 996
- US-A1- 2002 031 651

## Description

### Field of Invention

The invention relates to a polypropylene multilayer film comprising a polyolefin blended skin layer adjacent to the core layer. More preferably, the invention relates to a heat sealable biaxially oriented polypropylene film with low seal initiation temperature, improved hermetic seal performance and excellent processability.

### Background of Invention

It is the objective of this invention to provide an economical solution to a heat sealable biaxially oriented polypropylene film with low seal initiation temperature, improved hermetic seal performance and excellent processability.

US Patent 4,643,945 (Kiang) discloses a polymer blend useful for forming heat sealable plastic film, which comprises 60% to 40% by weight of propylene-ethylene-butene terpolymers wherein the ethylene content is about 0.1-10.0 mole percent and the 1-butene content is about 0.1-10.0 mole percent, and about 40%-60% by weight of a second component of copolymers of ethylene and alpha olefins containing four or more carbon atoms. The examples indicate seal initiation temperatures in the range of 105C to 120C. These seal initiation temperatures are quite high relative to the present invention.

US Patent 5,530,065 (Farley) discloses a film comprising at least one layer containing from of about 40 to of about 99 weight percent of a metallocene polyethylene copolymer and about 1 to 60 weight percent on a Ziegler-Natta based ethylene interpolymer such as LLDPE. These blends have extremely low seal initiation temperatures, however would be very difficult to process in the BOPP process due to the very low melting temperatures associated with these polymers.

US Patent 5,874,139 (Bosiers) discloses a multi-layer structure having a sealant layer and a polypropylene layer, the sealant layer comprising a polymer mixture of from of about 30 to 55 weight percent of a homogeneously branched substantially linear ethylene copolymer having a density in the range of 0.885 and 0.905 g/cc and 45 to 70 weight percent of a heterogeneously branched linear ethylene copolymer with a density in the range of 0.91 to 0.95 g/cc. The heat seal initiation temperature of these resin blends is in the range of existing BOPP films. In addition, processability of these resins would be difficult due to the low density and low melting temperatures of the resins selected.

US Patent 5,888,648 (Donovan) discloses a multilayer film for forming hermetic seals comprising a main film substrate, an intermediate layer selected for sufficient flow property under sealing conditions and an outer sealant layer bonded to the intermediate layer to provide a seal under sealing conditions. Resins cited in the examples for the intermediate layer are LLDPE, ethylene-propylene random copolymer, ethylene-propylene-butene terpolymer, a metallocene catalyzed polyethylene, and blends of these. Example 6 therein appears to describe a film having sequential layers of (i) a 50:50 blend of a metallocene plastomer (SLP9045) and an EPB random copolymer (Chisso 7701), (ii) EPB random copolymer (Chisso 7701), (iii) polypropylene homopolymer (Fina 3371), and (iv) high density polyethylene (M6211). The sealant layer resins cited in the examples are ethylene-propylene-butene terpolymers or ethylene-propylene random copolymer. Such film structures can be expensive due to the thick intermediate layer that is necessary to achieve a hermetic seal.

US Patent 6,231,975 (Kong) discloses an oriented sealable film comprising an inner layer comprising greater than 80% by weight of isotactic polypropylene or syndiotactic polypropylene, a sealing layer which can be an ethylene-propylene random copolymer, ethylene-butene copolymer, ethylene-propylene-butene terpolymer, butene-propylene copolymer, Ziegler Natta catalyzed polyethylenes or a metallocene catalyzed polyethylene, and a separable layer positioned between the inner layer and sealing layer. The separable layer comprising a blend of linear low density polyethylene and ethylene-propylene block copolymer. The objective of this invention is to provide a film with a peelable seal.

US Patent 6,423,420 (Brant) discloses an oriented multilayer film, comprising an outer layer comprising a metallocene catalyzed polyethylene having a density of 0.900 to 0.935 g/cm3 and a composition distribution breadth index of 50 to 95%; and a polypropylene core layer. This film does not have the low seal initiation temperature that the present invention has.

US Patent 6,458,469 (DeLisio) discloses an oriented multilayer film comprising a base layer, at least one tie layer, and at least one outer layer consisting of a metallocene catalyzed polyethylene. This metallocene catalyzed polyethylene layer does not have a low seal initiation temperature or hot tack properties.

In light of the deficiencies of the prior art it is thus an objective of this invention among others to provide an economical solution to the product packager and provide the heat seal properties of a low seal initiation temperature, broad temperature hot tack performance, good hermetic seal attributes and seal through contamination.

### Summary of the Invention

Described herein is a sealable biaxially oriented polypropylene (BOPP) film that provides unique heat seal attributes, such as a low seal initiation temperature, broad hermetic seal temperature, hot tack performance, and the capability to seal through contamination.

One embodiment is a blend of propylene-ethylene-butene terpolymer and a metallocene catalyzed polyethylene or polyethylene copolymer that could provide an enhanced seal properties over the prior art films. The metallocene catalyzed polyethylene is used as a minor component to allow for excellent processability similar to that of propylene-ethylene-butene terpolymers. If the metallocene catalyzed polyethylene becomes the major component or dominant phase, ease of processability could be lost.

Described herein is a polyolefin film having at least three layers, including a skin layer that has excellent heat seal performance. A core layer, adjacent to the seal layer, is the main layer that could be substantially additive-free, but optionally additives to improve functionality, such as slip agents, anti-block agents and like may be included in this layer. Another polymeric skin layer is incorporated on the opposite side of the core layer from the blended surface layer. This polymeric layer may function as a layer for metallization, printing, adhesive lamination, extrusion lamination and coatings. More particularly preferred is a layer for metallization.

One aspect of the invention is a polyolefin multilayer film comprising (a) a polyolefinic core layer and (b) at least one skin layer adjacent to the core layer comprising about 60%-80% by weight of a propylene-ethylene-butene terpolymer and about 20%-40% by weight of a metallocene catalyzed polyethylene or a metallocene catalyzed ethylene copolymer. Preferably, the skin layer comprises an incompatible blend of about 60%-80% by weight of the propylene-ethylene-butene terpolymer and about 20%-40% by weight of the metallocene catalyzed polyethylene or the metallocene catalyzed ethylene copolymer. The polyolefin multilayer film could be a biaxially oriented polypropylene film. The polyolefinic core layer is isotactic polypropylene. The film could further comprise a metallic layer. Preferably, the metallic layer comprises aluminum and has an optical density in the range of about 1.6-3.5. The skin layer of the film could have two distinct melting peaks on a DSC melting curve. Preferably, the skin layer has a seal initiation temperature in the range of about 93°C-71°C (200°F - 160°F) and a heat seal range of about 66°C (150°F). Preferably, the metallocene catalyzed polyethylene of the skin layer has a melt index of about 2.0-7.5 g/10min, and a density of about 0.878-0.900 g/cm³, and a peak melting temperature of about 60°C-95°C. Preferably, a matrix phase of the skin layer comprises the first component. More preferably, a dispersed phase of the skin layer comprises the second component. In one variation, the polypropylene ethylene-butene terpolymer comprises about 0.1-10 mole percent ethylene and about 0.1-20 mole percent 1-butene. Preferably, the core layer has a melt flow in the range of 1-9 g/10 min. Preferably, the film has a thickness in the range of about 10-25 µm (0.4-1.0 mil).

Another embodiment is a food packaging film comprising a as described above.

Yet another embodiment is a method of packaging a food product comprising obtaining a polyolefin multilayer film and covering the food product with the polyolefin multilayer film as described above.

Additional advantages of this invention will become readily apparent to those skilled in this art from the following detailed description, wherein only the preferred embodiments of this invention is shown and described, simply by way of illustration of the best mode contemplated for carrying out this invention. As will be realized, this invention is capable of other and different embodiments, and its details are capable of modifications in various obvious respects. Accordingly, the drawings and description are to be regarded as illustrative in nature and not as restrictive.

### Description of the Figures

Figure 1 shows the heat seal performance of the films of Comparative Example and Examples of this invention.

Figure 2 shows the hot tack performance of the films of Comparative Example and Examples of this invention.

### Detailed Description of the Invention

Biaxially oriented polypropylene (BOPP) film laminations could be used in the snack food packaging industry. In particular, snack food packaging has been a very large market segment for BOPP film products. For high barrier snack foods, a metallized, sealable, biaxially oriented polypropylene film could be used as the inside layer of the lamination. This metallized BOPP film could be laminated to a printed sealable slip BOPP film using a polyethylene extrudate to bond the two films together. The lamination could then be slit to width and shipped to the food manufacturer for vertical form fill and seal (VFFS) packaging. This type of BOPP sealable film could be used for other applications besides snack food applications. For example, the BOPP sealable film could be used for any product that requires good heat sealing attributes. Therefore, other processes such as horizontal form fill and seal (HFFS) and pouch formers could also be used to manufacture the BOPP sealable film.

It is desired that the sealant of such packaged products provide the following characteristics: 1) strong packaging heat seals, 2) low seal initiation temperature, 3) excellent hot tack strength over a broad temperature range, 4) good hermetic seal performance, and 5) seal through contamination.

There has been a need for a BOPP film that provides the aforementioned attributes. This long-felt need has been satisfied by the BOPP film of this invention comprising a polypropylene multilayer film comprising a polyolefin blended skin layer adjacent to the core layer, wherein the skin layer is a sealant layer having a low seal initiation temperature, improved hermetic seal performance and excellent processability. Seal initiation temperature is measured by heat sealing the film in a sealing machine at various temperatures to achieve about 79 g/cm (200g/in) seal strength. The lowest heat seal temperature that achieves about 79 g/cm (200g/in) strength is considered the seal initiation temperature. Thus, it is an objective of this invention to achieve the lowest seal initiation temperature possible relative to cost and processability. Topically, seal initiation temperatures that are about 93°C (200°F) or lower are desirable. Hermetic seal performance can be characterized by various means of "burst" tests. One method is to produce packaging bags on a packaging machine at successively lower sealing jaw temperatures and then subjecting them to a burst test in which air is injected into the bag at various pressures until the bag's seals fail or "burst." Another method is to immerse the bags under water under a certain weight and observe the formation of air bubbles leaking from the bag's seal areas. The minimum sealing jaw temperature at which the bag's seals pass these tests can be considered a measure of that sealant material's hermeticity properties. The term "processability" refers to the ability of the sealant layer to release from the hot orientation rolls that are used in the machine direction stretch.

Snack food product suppliers typically package their products in an array of older machine designs and new machine designs. Obviously, the newer machine designs are more robust and offer a larger processing window for the packager. However, these newer machines have the capability to package at very high speeds. The applicants recognized that the high packaging speeds present a challenge for the sealant of the BOPP films of the prior art. In particular, the applicants recognized that the sealant should preferably be able to initiate seals with adequate seal strengths (i.e. maintain minimum of about 79 g/cm (200g/in) seal strengths) as the packaging speeds increase due to shorter residence times in the heated sealing jaws. The applicants also recognized that the older machines present a different type of challenge in that heating may not be as uniform or efficient as the newer machines. Thus, a sealant with a broader heat seal temperature performance range is likely to be more effective than a sealant with a narrower heat seal range. This heat seal range can be characterized by the difference between the seal initiation temperature and the upper limit of the sealing temperature at which distortion of the lamination occurs due to the lamination melting. This is usually anywhere from 149-177°C (300-350°F) (about the melting point of polypropylene) dependent upon the type of packaging or sealing machine and residence time. Thus, for example, a sealant with an initiation temperature of 93°C (200°F) would have a broader seal range than a sealant with an initiation temperature of 104°C (220°F) by 11°C (20°F) assuming that both sealants in similar lamination structures distort at the same upper temperature of 166°C (330°F) on a particular packaging machine.

Depending on the product type, some snack food packages could be designed to prevent moisture and oxygen from entering the package. Thus it is important that seal integrity is maintained so as not to introduce oxygen or moisture into the package. This could be one particular packaging area where seal improvements could be necessary. However, snack food packagers typically do not want to make capital investments to improve their equipment. Therefore, it is left to the film supplier to overcome these issues by improving the film design.

There could be some food products, other than snack foods, that contaminate the seal interface of the package. These contaminants are typically powders such as cocoa powder, milk powder, dry soup mixes or cheese that interfere with a clean seal in the packaging process. It has been found by the applicants that conventional BOPP sealants do not provide the ability to seal effectively through contaminants. Thus, the applicants recognized a need for an OPP film that can seal through contamination. Currently, such sealants that seal through contamination are thick layers of extrusion coated polymers such as polethylenes, ethylene copolymers, and ionomers, typically at coating weights of about 1.4 kg/cm - 5.4 kg /cm (3 lbs/m to 12 lbs/nm) or more (about 21 gauge units to 84 gauge units or more). This extrusion coating process requires a secondary processing step that could add cost to the food package.

The present invention relates to a multi-layer sealable polyolefin film that provides excellent heat seal characteristics. Preferably, the film is a polyolefin multi-layer film with the following structure: a core layer comprising isotactic polypropylene, and a first skin layer, adjacent to the core layer, containing a blend of 60%-80% by weight of a propylene-ethylene-butene terpolymer and 20%-40% by weight of a metallocene catalyzed polyethylene or a metallocene catalyzed ethylene copolymer, and a second polymeric skin layer on the opposite side of the core layer from the first skin layer, wherein the second polymeric skin layer is isotactic polypropylene. The isotactic polypropylene resin can be defined as having a melt flow in the range of 1-9 g/10 min. More particularly preferred is a melt flow rate in the range of 1-5 g/10min. Most particulary preferred is a melt flow rate in the range of 1-3 g/10min.

One aspect of this invention is the use a blend of a propylene-ethylene-butene terpolymer blended with a metallocene catalyzed polythylene or a metallocene catalyzed ethylene copolymer. The skin layer comprises 20%-40% by weight of the skin layer of a metallocene catalyzed polyethylene or a metallocene catalyzed ethylene copolymer and 60%-80% by weight of the skin layer of propylene-ethylene-butene terpolymer. It is preferable to have the metallocene catalyzed polyethylene or ethylene copolymer as the minority component to reduce sticking to the machine direction stretching heated rolls. Preferably, the metallocene catalyzed polyethylene concentration should not be too low or the seal initiation temperature will not be low enough (i.e. about 93°C (200°F) or lower). Since the metallocene catalyzed polyethylene and propylene-ethylene-butene polymers are not compatible they will phase segregate. This can be seen by two distinct melting peaks on a DSC melting curve. This incompatibility is advantageous as the metallocene catalyzed polyethylene melting peak will provide a low seal initiation temperature of about 93°C (200°F) or lower. However, since the metallocene catalyzed polyethylene is the minor component (i.e. less than 50%), it will not cause sticking problems in the machine direction orientation rolls. Such sticking problems are due to the sealant blend partially melting and adhering to the heated machine direction orientation rollers commonly used in biaxial orientation lines. These sticking problems can cause unacceptable aesthetic issues whereby the normally glossy, smooth surface of the BOPP film's sealant side is marred by scuff marks, high haze, "sticking" marks, or other surface defects; even worse, film breakage could occur as the sealant could possibly adhere very strongly to the heated orientation rollers.

The metallocene catalyzed polyethylene of the skin layer of the present invention has a melt index of about 2.0-7.5 g/10min, and a density of about 0.878 to of about 0.900 g/cm3, and a peak melting temperature of about 60C to 95C. It is preferred to use densities on the low end of the spectrum to provide the lowest seal initiation temperature possible.

The polypropylene terpolymers used in the present invention contain of about 0.1-10.0 mole percent ethylene and about 0.1-20.0 mole percent 1-butene. These concentration ranges were chosen because of the good heat seal and hot tack properties that are achieved when as a sealant layer by itself.

### Comparative Example 1:

A three layer 70 gauge biaxially oriented polypropylene (BOPP) film was manufactured on a 1.5-meter wide BOPP tenter line. The heat sealable skin layers was 6 gauge units and consisted of a propylene-ethylene-butene terpolymer having 1.7 mol% ethylene and 16.2 mol% butene-1 and a melt flow rate of 9.0 g/10min and a peak melting temperature of 131.7°C. The heat sealable layer also contained 4000 ppm of 2um particle size antiblock agent of crosslinked silicone polymer such as Tospearl 120. The opposite skin layer was an isotactic polypropylene polymer having a melt flow rate of 4.5 g/10min as measured by ASTM D1238. Isotactic polypropylene resin was also used in the core layer, the melt flow rate of the core layer isotactic polypropylene homopolymer was 1.6 g/10min.

The sheet was heated to 135°C, stretched 5 times in the machine direction, cooled, introduced into a tenter oven, heated to 164°C, stretched to 9 times in the transverse direction and cooled to minimize film dimensional shrinkage.

### Example 1:

A three layer 68 gauge biaxially oriented polypropylene (BOPP) film was manufactured on a 1.5-meter wide BOPP tenter line. The heat sealable skin layers was 6 gauge units and consisted of a blend of 70% by weight of a propylene-ethylene-butene terpolymer having 1.7 mol% ethylene and 16.2 mol% butene-1 and a melt flow rate of 9.0 g/10min and a peak melting temperature of 131.7C and 30% of a ethylene-hexene plastomer having a density of 0.895 g/cm3 and a melt index of 3.5 g/10min and a peak melting temperature of 89°C. The heat sealable layer also contained 4000 ppm of 2um particle size antiblock agent of crosslinked silicone polymer such as Tospearl 120. The opposite skin layer was an isotactic polypropylene polymer having a melt flow rate of 4.5 g/10min as measured by ASTM D1238. Isotactic polypropylene resin was also used in the core layer, the melt flow rate of the core layer isotactic polypropylene homopolymer was 1.6 g/10min.

The sheet was heated to 135°C, stretched 5 times in the machine direction, cooled, introduced into a tenter oven, heated to 164°C, stretched to 9 times in the transverse direction and cooled to minimize film dimensional shrinkage.

### Example 2:

A three layer 68 gauge biaxially oriented polypropylene (BOPP) film was manufactured on a 1.5-meter wide BOPP tenter line. The heat sealable skin layers was 6 gauge units and consisted of a blend of 70% by weight of a propylene-ethylene-butene terpolymer having 1.7 mol% ethylene and 16.2 mol% butene-1 and a melt flow rate of 9.0 g/10min and a peak melting temperature of 131.7C and 30% of a ethylene-hexene plastomer having a density of 0.900 g/cm3 and a melt index of 7.5 g/10min and a peak melting temperature of 95°C. The heat sealable layer also contained 4000 ppm of 2um particle size antiblock agent of crosslinked silicone polymer such as Tospearl 120. The opposite skin layer was an isotactic polypropylene polymer having a melt flow rate of 4.5 g/10min as measured by ASTM D1238. Isotactic polypropylene resin was also used in the core layer, the melt flow rate of the core layer isotactic polypropylene homopolymer was 1.6 g/10min.

The sheet was heated to 135°C, stretched 5 times in the machine direction, cooled, introduced into a tenter oven, heated to 164°C, stretched to 9 times in the transverse direction and cooled to minimize film dimensional shrinkage.

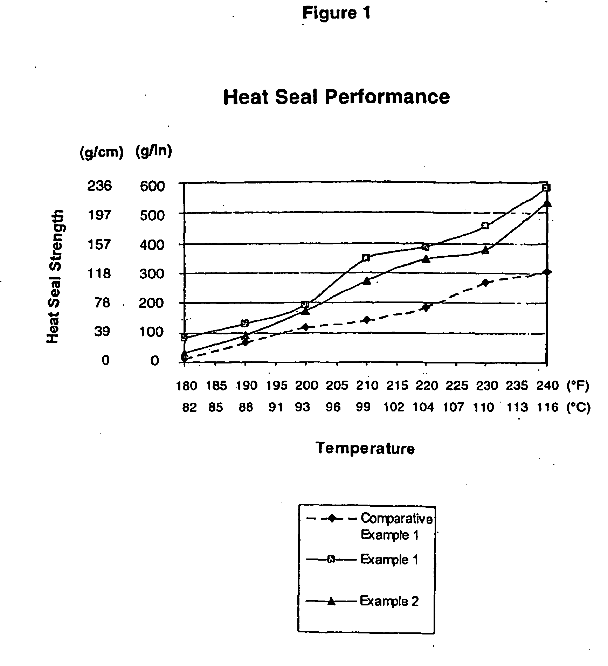

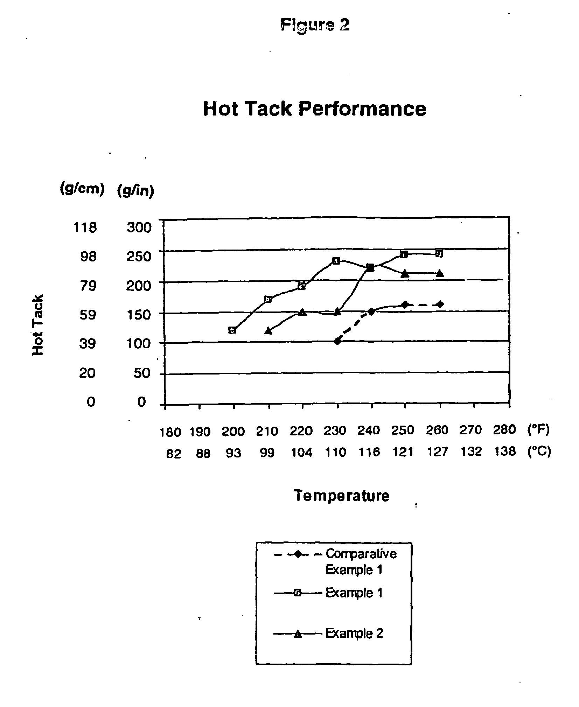

Figure 1 shows the heat seal performance of the films of Comparative Example and Examples of this invention. Figure 2 shows the hot tack performance of the films of Comparative Example and Examples of this invention.

The film properties of the films of Comparative Example and Examples were measured as follows:
(1) Film thickness: Film thickness was measured by physically measuring the thickness via commercially available and calibrated calipers or micrometers across the transverse width of the film in one-inch increments and averaging the total. Target average thickness was 15-18 µm (0.0006 to 0.0007" or 0.6-0.7 mil or 60-70 gauge).
(2) Melt flow: Measured in accordance with ASTM D1238.
(3) Peak melting temperature: Measured in accordance to ASTM D3417-99.
(4) Density: Measured in accordance to ASTM D792.
(5) Heat seal strength: Measured by using a Sentinel sealer model 12 ASL at 40 psi, 0.5 second dwell time, with heated flat upper seal jaw Teflon coated, and unheated lower seal jaw, rubber with glass cloth covered. The film sample is heat-sealed sealant-side to sealant- side at the desired seal temperature(s) in the Sentinel sealer (e.g. ranging from 71°C to 149°C (160°F to 300°F)) and then the respective seal strengths are measured using an Instron model 4201 tensile tester. The heat-sealed film samples are cut into 1-inch wide strips, the two unsealed tails placed in the upper and lower Instron clamps, and the sealed tail supported at a 90° angle to the two unsealed tails for a 90° T-peel test. The peak and average seal strength is recorded.
(6) Hot tack: Measured by using a Sentinel sealer model 12 ASL with Versatool hot tack attachment at 40 psi, 0.5 second dwell, with heated flat upper seal jaw, Teflon coated, and unheated lower seal jaw, rubber with glass cloth covered. 1-inch wide strips of the test film are cut and sealed in the Sentinel sealer at the desired sealing temperatures while inserted into the Versatool attachment and subjected to various weights from 100 gram weights and more. The test sample is graded as either passing or failing hot tack at that temperature and weight depending on whether the seal holds together or falls apart after sealing. The maximum weight that the test sample passes at that respective heat seal temperature is recorded. Hot tack values of about 150 g/in minimum are preferably desired.
(7) Optical density: Measured by using a Tobias Associates model TBX transmission densitometer. Optical density is defined as the amount of light reflected from the test specimen under specific conditions. Optical density is reported in terms of a logarithmic conversion. For example, a density of 0.00 indicates 100% of the light falling on the sample is reflected. A density of 1.00 indicates that 10% of the light is being reflected; 2.00 is equivalent to 1%, etc.
(8) Seal initiation temperature: Seal initiation temperature is evaluated using method (5) above and is determined as the lowest heat seal temperature setting which gives a heat seal strength of about 200g/in. Seal initiation temperatures of about 93°C (200°F) or less are preferably desired.

This application discloses several numerical ranges in the text and figures. The numerical ranges disclosed support any range or value within the disclosed numerical ranges even though a precise range limitation is not stated verbatim in the specification because this invention can be practiced throughout the disclosed numerical ranges.

## Claims

1. A polyolefin multilayer film comprising:
(a) a polyolefinic core layer, wherein the polyolefinic core layer is isotactic polypropylene;
(b) a first skin layer adjacent to the core layer comprising:
60%-80% by weight of a propylene-ethylene-buteneoterpolymer, and
20%-40% by weight of a metallocene catalyzed polyethylene or a metallocene catalyzed ethylene copolymer; and
(c) a second polymeric skin layer on the opposite side of the core layer from the first skin layer, wherein the second polymeric skin layer is isotactic polypropylene.

2. A film according to claim 1, wherein the first skin layer comprises:
about 70% by weight of the propylene-ethylene-butene terpolymer, and
about 30% by weight of the metallocene catalyzed polyethylene or the metallocene catalyzed ethylene copolymer.

3. A film according to claim 1, wherein the first skin layer comprises an incompatible blend of 60%-80% by weight of the propylene-ethylene-butene terpolymer and 20%-40% by weight of the metallocene catalyzed polyethylene or the metallocene catalyzed ethylene copolymer.

4. A film according to claim 3, wherein the first skin layer comprises an incompatible blend of about 70% by weight of the propylene-ethylene-butene terpolymer and about 30% by weight of the metallocene catalyzed polyethylene or the metallocene catalyzed ethylene copolymer.

5. A film according to any one of claims 1 to 4, wherein the polyolefinic core layer, the first skin layer, and the second polymeric skin layer are coextruded and the resulting film is biaxially oriented by stretching in the machine direction and stretching in the transverse direction.

6. A film according to any one of claims 1 to 5, wherein the polyolefin multilayer film is a biaxially oriented polypropylene film.

7. A film according to any one of claims 1 to 6, wherein the polypropylene ethylene-butene terpolymer comprises 0.1-10 mole percent ethylene and 0.1-20 mole percent 1-butene.

8. A film according to any one of claims 1 to 7, wherein the metallocene catalyzed polyethylene of the first skin layer has a melt index of 2.0-7.5 g/10 min, and a density of 0.878-0.900 g/cm³, and a peak melting temperature of 60°C-95°C.

9. A film according to any one of claims 1 to 8, wherein the first skin layer has a seal initiation temperature in the range of 93°C - 71 °C (200°F - 160°F).

10. A film according to any one of claims 1 to 9, wherein the first skin layer has a heat seal range of about 66°C (150°F).

11. A film according to any one of claims 1 to 10, wherein the first skin layer has two distinct melting peaks on a DSC melting curve.

12. A film according to any one of claims 1 to 11, wherein a matrix phase of the first skin layer comprises the propylene-ethylene-butene terpolymer.

13. A film according to claim 12, wherein a dispersed phase of the first skin layer comprises the metallocene catalyzed polyethylene or metallocene catalyzed ethylene copolymer.

14. A film according to any one of claims 1 to 13, wherein the core layer has a melt flow in the range of 1-9 g/10 min.

15. A film according to any one of claims 1 to 13, wherein the core layer has a melt flow rate of about 4.5 g/10 min.

16. A film according to any one of claims 1 to 15, wherein the second skin layer is a layer that may function as a layer for metallization, printing, adhesive lamination, extrusion lamination, and coatings.

17. A film according to any one of claims 1 to 15, wherein the second skin layer is a layer that may function as a layer for metallization.

18. A film according to any one of claims 1 to 17, wherein the second skin layer has a melt flow rate of about 1.6 g/10 min.

19. A film according to any one of claims 1 to 18, further comprising a metallic layer.

20. A film according to claim 19, wherein the metallic layer comprises aluminum and has an optical density in the range of 1.6-3:5.

21. A film according to any one of claims 1 to 20, wherein the film has a thickness in the range of 10-25 µm (0.4-1.0 mil).

22. A food packaging film comprising a film according to any one of claims 1 to 21.

23. A method of packaging a food product comprising obtaining a polyolefin multilayer film according to any one of claims 1 to 21, and covering the food product with the polyolefin multilayer film.

## Patentansprüche

1. Polyolefin-Verbundfolie, umfassend:
(a) eine Polyolefin-Kernlage, worin die Polyolefin-Kernlage isotaktisches Polypropylen ist;
(b) eine erste Hautlage, die benachbart zur Kernlage liegt und Folgendes umfasst:
60-80 Gew.-% eines Propylen-Ethylen-Buten-Terpolymers und
20-40 Gew.-% eines metallocenkatalysierten Polyethylens oder eines metallocenkatalysierten Ethylen-Copolymers; und
(c) eine zweite Polymer-Hautlage auf der, von der ersten Hautlage aus gesehen, gegenüberliegenden Seite der Kernlage, worin die zweite Polymer-Hautlage isotaktisches Polypropylen ist.

2. Folie nach Anspruch 1, worin die erste Hautlage Folgendes umfasst:
etwa 70 Gew.-% des Propylen-Ethylen-Buten-Terpolymers und
etwa 30 Gew.-% des metallocenkatalysierten Polyethylens oder des metallocenkatalysierten Ethylen-Copolymers.

3. Folie nach Anspruch 1, worin die erste Hautlage eine inkompatible Mischung aus 60-80 Gew.-% des Propylen-Ethylen-Buten-Terpolymers und 20-40 Gew.-% des metallocenkatalysierten Polyethylens oder des metallocenkatalysierten Ethylen-Copolymers umfasst.

4. Folie nach Anspruch 3, worin die erste Hautlage eine inkompatible Mischung aus etwa 70 Gew.-% des Propylen-Ethylen-Buten-Terpolymers und etwa 30 Gew.-% des metallocenkatalysierten Polyethylens oder des metallocenkatalysierten Ethylen-Copolymers umfasst.

5. Folie nach einem der Ansprüche 1 bis 4, worin die Polyolefin-Kernlage, die erste Hautlage und die zweite Polymer-Hautlage coextrudiert sind und die daraus resultierende Folie mittels Recken in Maschinenrichtung und Recken in Querrichtung biaxial gereckt ist.

6. Folie nach einem der Ansprüche 1 bis 5, worin die Polyolefin-Verbundfolie eine biaxial gereckte Polypropylenfolie ist.

7. Folie nach einem der Ansprüche 1 bis 6, worin das Polypropylen-Ethylen-Buten-Terpolymer 0,1-10 Mol-% Ethylen und 0,1-20 Mol-% 1-Buten umfasst.

8. Folie nach einem der Ansprüche 1 bis 7, worin das metallocenkatalysierte Polyethylen der ersten Hautlage einen Schmelzindex von 2,0-7,5 g/10 min, eine Dichte von 0,878-0,900 g/cm³ und ein Schmelztemperaturmaximum von 60-95°C aufweist.

9. Folie nach einem der Ansprüche 1 bis 8, worin die erste Hautlage eine Siegelungsanfangstemperatur im Bereich von 93-71°C (200 -160 °F) aufweist.

10. Folie nach einem der Ansprüche 1 bis 9, worin die erste Hautlage einen Heißsiegelbereich von etwa 66°C (150 °F) aufweist.

11. Folie nach einem der Ansprüche 1 bis 10, worin die erste Hautlage in einer DSC-Schmelzkurve zwei unterschiedliche Schmelzpeaks aufweist.

12. Folie nach einem der Ansprüche 1 bis 11, worin eine Matrixphase der ersten Hautlage das Propylen-Ethylen-Buten-Terpolymer umfasst.

13. Folie nach Anspruch 12, worin eine dispergierte Phase der ersten Hautlage das metallocenkatalysierte Polyethylen oder das metallocenkatalysierte Ethylen-Copolymer umfasst.

14. Folie nach einem der Ansprüche 1 bis 13, worin die Kernlage einen Schmelzfluss im Bereich von 1-9 g/10 min aufweist.

15. Folie nach einem der Ansprüche 1 bis 13, worin die Kernlage einen Schmelzflussbereich von etwa 4,5 g/10 min aufweist.

16. Folie nach einem der Ansprüche 1 bis 15, worin die zweite Hautlage eine Lage ist, die als Lage zur Metallisierung, zum Drucken, Klebekaschieren, Extrusionskaschieren und für Beschichtungen einsetzbar ist.

17. Folie nach einem der Ansprüche 1 bis 15, worin die zweite Hautlage eine Lage ist, die als Lage zur Metallisierung einsetzbar ist.

18. Folie nach einem der Ansprüche 1 bis 17, worin die zweite Hautlage eine Schmelzflussrate von etwa 1,6 g/10 min aufweist.

19. Folie nach einem der Ansprüche 1 bis 18, die weiters eine Metalllage umfasst.

20. Folie nach Anspruch 19, worin die Metalllage Aluminium umfasst und eine optische Dichte im Bereich von 1,6-3,5 aufweist.

21. Folie nach einem der Ansprüche 1 bis 20, worin die Folie eine Dicke im Bereich von 10-25 µm (0,4-1,0 mil) aufweist.

22. Lebensmittelverpackungsfolie, die eine Folie nach einem der Ansprüche 1 bis 21 umfasst.

23. Verfahren zum Verpacken eines Lebensmittelprodukts, umfassend das Erhalten einer Polyolefin-Verbundfolie nach einem der Ansprüche 1 bis 21 und Bedecken des Lebensmittelprodukts mit der Polyolefin-Verbundfolie.

## Revendications

1. Film multicouche polyoléfinique comprenant :
(a) une couche d'âme polyoléfinique, dans laquelle la couche d'âme polyoléfinique est du polypropylène isotactique ;
(b) une première couche de peau adjacente à la couche d'âme comprenant :
60%-80% en poids d'un terpolymère de propylène-éthylène-butène, et
20%-40% en poids d'un polyéthylène obtenu par catalyse métallocène ou d'un copolymère d'éthylène obtenu par catalyse métallocène ; et
(c) une seconde couche de peau polymère sur le côté opposé de la couche d'âme par rapport à la première couche de peau, dans laquelle la seconde couche de peau polymère est du polypropylène isotactique.

2. Film selon la revendication 1, dans lequel la première couche de peau comprend :
environ 70% en poids du terpolymère de propylène-éthylène-butène, et
environ 30% en poids du polyéthylène obtenu par catalyse métallocène ou du copolymère d'éthylène obtenu par catalyse métallocène.

3. Film selon la revendication 1, dans lequel la première couche de peau comprend un mélange incompatible de 60%-80% en poids du terpolymère de propylène-éthylène-butène, et 20%-40% en poids du polyéthylène obtenu par catalyse métallocène ou du copolymère d'éthylène obtenu par catalyse métallocène.

4. Film selon la revendication 3, dans lequel la première couche de peau comprend un mélange incompatible d'environ 70% en poids du terpolymère de propylène-éthylène-butène, et 30% en poids du polyéthylène obtenu par catalyse métallocène ou du copolymère d'éthylène obtenu par catalyse métallocène.

5. Film selon l'une quelconque des revendications 1 à 4, dans lequel la couche d'âme polyoléfinique, la première couche de peau et la seconde couche de peau polymère sont coextrudées et le film résultant est orienté de manière biaxiale par étirement dans le sens longitudinal et étirement dans le sens transversal.

6. Film selon l'une quelconque des revendications 1 à 5, dans lequel le film multicouche polyoléfinique est un film de polypropylène orienté de manière biaxiale.

7. Film selon l'une quelconque des revendications 1 à 6, dans lequel le terpolymère de propylène-éthylène-butène comprend 0,1-10 pour cent en mole d'éthylène et 0,1-20 pour cent en mole de 1-butène.

8. Film selon l'une quelconque des revendications 1 à 7, dans lequel le polyéthylène obtenu par catalyse métallocène de la première couche de peau a un indice de fluidité de 2,0-7,5 g/10 min et une masse volumique de 0,878-0,900 g/cm³ et une température de fusion maximum de 60°C-95°C.

9. Film selon l'une quelconque des revendications 1 à 8, dans lequel la première couche de peau a une température de début de scellage dans la gamme de 93°C-71°C (200°F-160°F) .

10. Film selon l'une quelconque des revendications 1 à 9, dans lequel la première couche de peau a une gamme de thermoscellage d'environ 66°C (150°F) .

11. Film selon l'une quelconque des revendications 1 à 10, dans lequel la première couche de peau a deux pics de fusion distincts sur une courbe de fusion DSC.

12. Film selon l'une quelconque des revendications 1 à 11, dans lequel une phase matricielle de la première couche de peau comprend le terpolymère de propylène-éthylène-butène.

13. Film selon la revendication 12, dans lequel une phase dispersée de la première couche de peau comprend le polyéthylène obtenu par catalyse métallocène ou un copolymère d'éthylène obtenu par catalyse métallocène.

14. Film selon l'une quelconque des revendications 1 à 13, dans lequel la couche d'âme a un indice de fluidité dans la gamme de 1-9 g/10 min.

15. Film selon l'une quelconque des revendications 1 à 13, dans lequel la couche d'âme a un indice de fluidité d'environ 4,5 g/10 min.

16. Film selon l'une quelconque des revendications 1 à 15, dans lequel la seconde couche de peau est une couche qui peut fonctionner comme une couche pour la métallisation, l'impression, la stratification adhésive, le boudinage-laminage et les revêtements.

17. Film selon l'une quelconque des revendications 1 à 15, dans lequel la seconde couche de peau est une couche qui peut fonctionner comme couche pour la métallisation.

18. Film selon l'une quelconque des revendications 1 à 17, dans lequel la seconde couche de peau a un indice de fluidité d'environ 1,6 g/10 min.

19. Film selon l'une quelconque des revendications 1 à 18, comprenant en plus une couche métallique.

20. Film selon la revendication 19, dans lequel la couche métallique comprend de l'aluminium et a une densité optique dans la gamme de 1,6-3,5.

21. Film selon l'une quelconque des revendications 1 à 20, dans lequel le film a une épaisseur dans la gamme de 10-25 µm (0,4-1,0 mil).

22. Film d'emballage alimentaire comprenant un film selon l'une quelconque des revendications 1 à 21.

23. Procédé d'emballage d'un produit alimentaire comprenant l'obtention d'un film multicouche polyoléfinique selon l'une quelconque des revendications 1 à 21 et l'enrobage du produit alimentaire avec le film multicouche polyoléfinique.
